(19) Europäisches Patentamt
European Patent Office
Office européen des brevets

(11) **EP 2 103 146 B1**

(12) **EUROPEAN PATENT SPECIFICATION**

(45) Date of publication and mention
of the grant of the patent:
**13.07.2011 Bulletin 2011/28**

(51) Int Cl.:
*H04N 9/73* (2006.01)

(21) Application number: **07849336.8**

(22) Date of filing: **05.12.2007**

(86) International application number:
**PCT/IB2007/054925**

(87) International publication number:
**WO 2008/068718 (12.06.2008 Gazette 2008/24)**

(54) **AN AMBIENT LIGHTING SYSTEM FOR A DISPLAY DEVICE**

RAUMBELEUCHTUNGSSYSTEM FÜR EINE ANZEIGEVORRICHTUNG

SYSTÈME D'ÉCLAIRAGE AMBIANT POUR UN DISPOSITIF D'AFFICHAGE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **07.12.2006 EP 06125637**

(43) Date of publication of application:
**23.09.2009 Bulletin 2009/39**

(73) Proprietor: **Koninklijke Philips Electronics N.V.**
**5621 BA Eindhoven (NL)**

(72) Inventors:
• **KRIJN, Marcellinus P. C. M.**
**5656 AE Eindhoven (NL)**
• **SALTERS, Bart A.**
**5656 AE Eindhoven (NL)**
• **HOOGENSTRAATEN, Willem F. J.**
**5656 AE Eindhoven (NL)**

(74) Representative: **Uittenbogaard, Frank et al**
**Philips**
**Intellectual Property & Standards**
**P.O. Box 220**
**5600 AE Eindhoven (NL)**

(56) References cited:
**WO-A-2005/062608     WO-A-2005/076602**
**WO-A-2006/003624     WO-A-2006/059263**
**WO-A-2007/072340     DE-U1-202005 008 776**
**US-A1- 2006 227 302**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The present invention relates to an ambient lighting system for a display device including an image display region, and to a display device comprising such an ambient lighting system.

BACKGROUND OF THE INVENTION

EP 1 551 178 discloses a so-called Ambilight, which is a concept that enhances the viewing experience when watching TV by means of ambient lighting. The image is extended outside the boundaries of the TV screen. This concept (feature) has been introduced in the market recently and found to have a tremendous positive impact on the sales of high-end LCD TVs equipped with this feature.

In the ambilight concept, as it is implemented at present, by means of low-pressure gas-discharge lamps such as CCFL (cold-cathode-fluorescence) lamps located behind the TV set, an extension of the image is projected on the wall behind the TV. Each lamp creates a 'pixel' of light on the wall behind the display (or on a dedicated diffusely reflecting or diffusely transmitting screen attached to the display), where the intensity of each of the lamps can be varied independently. This intensity is derived from the actual video information according to a certain algorithm. In principle, this is done on a frame-to-frame basis.

In all versions of the Ambilight, there is an RGB triplet of CCFL lamps on each side of the display. In other words, there is one pixel of coloured light projected onto the wall for each side of the display (i.e. left, right, top, and bottom), thus, at most 4 pixels in total. This number can be increased somewhat in principle, by reducing the length of the CCFL lamps and putting more lamps side-by-side. 8 pixels in total seem to be an upper limit for reasons of cost.

WO 2006/003624 discloses ambient lighting derived from video content.

WO 2006/059263 discloses a display system using surround-lighting.

US 2006/0227302 discloses illuminators using reflective optics.

WO 2005/076602 discloses a display apparatus using background tighting.

WO 2005/062608 discloses an ambient lighting system for display devices.

WO 2005/062608 discloses a supplementary visual display system.

DE 20 2005 008 776 U1 discloses a tv apparatus or pc monitor.

BRIEF DESCRIPTION OF THE INVENTION

The object of the present invention is to provide low-cost ambient light system (ambilight) with more resolution.

According to one aspect the present invention relates to an ambient lighting system for a display device including an image display region, comprising:

- controllable light sources each being adapted to emit a light beam of at least one wavelength onto region at least partly peripherally surrounding the display region and visually appearing to a viewer, the light sources being substantially point-like disposed in an array such that the positions of the emitted light beams onto the region form a pixelated image providing at least a partial extension of the image display region,
- an image analyzer for determining color information from video data of the displayed image, the color information being used as a control parameter for controlling the emission color of the emitted light beams,
- collimators having exits,
- refractive optical elements situated in front of the exits, and
- re-directional optical elements situated in front of the refractive optical elements,

wherein the collimators are situated with respect to the light sources such that the emitted light beams pass through the collimators, the exits, the refractive optical elements and the re-directional optical elements prior to being emitted onto the region visually appearing to the viewer.

Due to the small dimension it is possible to arrange the light sources in an array, where typically each of the light sources contributes to one pixel. Thus, a pixelated ambient light surrounding the display is provided, wherein the "pixels" do not only extend along the outer perimeter of the display but also along radial directions. The result thereof is that the resolution of the projected light onto the region becomes higher. Also, due to the small dimension of the light sources the internal arrangement and/or the adjustment of the light sources can easily be changed. By the term color information is meant the color and/or the intensity of the color.

The ambient lighting system comprises collimators having exits and situated with respect to light sources such that the emitted light beams pass through the collimators and through the exits prior to being emitted onto the region visually appearing to the viewer, to reduce the angular spread of the light sources when hitting the region, and thus the resolution of the pixels on the region is enhanced.

The ambient lighting system comprises refractive optical elements situated in front of the exits of the collimators such that the emitted light beams passing through the exits of the collimators pass through the refractive optical elements, to provide an additional degree of collimation.

The re-directional optical elements are situated in front of the refractive optical elements such that the light passing through the refractive optical elements pass through the re-directional optical elements prior to being emitted onto pre-defined locations on the region visually appearing to the viewer. Thus, the angle position of the light beam emitted by the light sources can be re-directed to the intended location on the region.

In one embodiment, the point-like light sources comprise Light Emitting Diodes (LEDs).

Unlike gas-discharge lamps, LEDs have the advantage that they are inexpensive and require little space. Due to how localized the light beam is, each LED produces a "spot" of light of at least one color, i.e. a single pixel of at least one color. Thus, it is possible to arrange many LEDs together and therefore generate a two dimensional pixel image (having large number of pixels, i.e. columns and rows) onto the region, thus providing a large colour gamut. Also, with a reasonable number of LEDs, the amount of light being used can be reduced compared to the existing CCFL lamps since these lamps require higher voltage and more expensive drivers.

In one embodiment, the array of the point-like light sources comprises at least two columns and at least two rows of light sources arranged substantially at the periphery or the back side of the display device.

Thus, it is possible to extend illuminated region towards the sides of the display, or the top/bottom, or both.

In one embodiment, the array of the point-like light sources is a frame like-structure comprising at least two rows and two columns of the substantially point-like light sources arranged substantially at the periphery or the back side of the display device.

Thus, it is possible to extend the displayed image not only along the out perimeter of the display but also along radial directions.

In one embodiment, the collimators are selected from:

- a tapered funnel in air having light reflecting side walls, and
- solid collimators adapted to guide the light from an entrance to an exit by means of total-internal-reflection.

In one embodiment, the refractive optical elements are selected from:

- a positive lens,
- a negative lens,
- a bi-convex lens, a plano-convex lens, a bi-concave lens or a plano-concave lens,
- a fresnel-type lens,
- a holographic lens,
- active optical elements being connected to a power source for changing the focal length of the optical elements and/or re-directing the beam,

- optical elements being manually adjustable for changing the focal length of the optical elements and/or re-directing the beam, for each pixel independently or for several or all pixels on one side of the display together,
- a diffuser, including a diffuser with asymmetric diffusing properties, and
- a combination thereof.

In one embodiment, the re-directional optical elements are selected from:

- a transparent film having a repetitive prism-like structures, and
- a negative lens covering at least one collimator.

In one embodiment, the substantially point-like light sources are mounted on a printed circuit board, the circuit board being adapted to conduct heat generated by the point-like light sources.

Thus, the circuit board also acts as a "cooling" agent since it conducts the heat produced by the light sources away. Also, at least a part of the driving electronics used to drive the light sources may be located on the printed circuit board.

In one embodiment, the ambient lighting system further comprises an adjustment mechanism connected to the substantial point-like light sources for adjusting the light sources, the adjustment including adjusting the angle position of the point-like light sources and the angle position of the emitted light beams.

Thus, in case the distance between the display and the region changes, e.g. due to is resting on a tabletop instead of mounting it directly to the wall, the settings of the light sources can easily be changed by changing the angle position of the light sources and therefore the angle position of the emitted light beam. Therefore, the pixelated ambient light corresponds with the distance between the display and the region.

In one embodiment, the ambient lighting system further comprises an adjustment mechanism comprising an electronically adjustable optical element or re-directional optical element based on a liquid-crystal effect for adjusting the angle position of the emitted light beams onto the region visually appearing to the viewer.

Thus, it is possible to optimize the ambiance lighting pattern on the wall when changing the distance between the display and the wall. The most flexible system (albeit not very practical) is the one in which for each pixel on the wall one can adjust the pixel position as well as the pixel size.

In one embodiment, the ambient lighting system further comprises at least one elongated light guide comprising an out-coupling structure, the light guide being coupled to one or more of the substantially point-like light sources such that the emitted light beam emitted by at least one of the substantially point-like light sources becomes conducted into the light guide under an angle such that the light becomes guided by means of total internal reflection until it interacts with the out-coupling structure and becomes coupled out of the light guide.

Thus, in case one wants only few pixels on the wall (say 2 on each side of the display), it is more easy to get the required uniformity while using only few LEDs.

In one embodiment, the ambient lighting system further comprises a re-shaping mechanism for re-shaping the light beams such that each respective pixel in the pixelated regions has a pre-defined shape. In one embodiment, the re-shaping mechanism comprises an optical element formed by two or more segments arranged in front of the substantially point-like light sources such that the emitted light beams pass through the two or more segments, the shapes of the segments and their internal arrangement being such that the light beam will be re-directed differently to a fixed location on the region visually appearing to the viewer.

It is namely so that in case one projects a round or rectangular beam at an oblique angle onto a wall, the resulting spot on the wall will have an elliptical or trapezoidal shape, respectively. When covering a wall with a number of ellipses or trapezoids, there will always be non-uniformities caused by too much overlap at certain locations and voids at other locations. Thus, by reshaping the beam such that when projected at an oblique angle onto a wall, the resulting spot is e.g. a rectangle, such non-uniformities will be eliminated.

According to another aspect, the present invention relates to a display device including an image display region comprising the ambient lighting system.

In one embodiment, the display device is selected from:

- computer monitor display,
- cathode ray tube (CRT) display,
- a liquid crystal display (LCD),
- a plasma discharge display, a projection display,
- thin-film printed optically-active display,
- or a display using functionally equivalent display technology.

The aspects of the present invention may each be combined with any of the other aspects. These and other aspects of the invention will be apparent from and elucidated with reference to the embodiments described hereinafter.

BRIEF DESCRIPTION OF THE DRAWINGS

Embodiments of the invention will be described, by way of example only, with reference to the drawings, in which:

Figure 1 shows an ambient lighting system for a display device according to the present invention,
Figure 2 illustrates graphically pixelated ambient light appearing towards a viewer,
Figure 3-4 illustrates graphically a resolution of the ambient lighting system according to the present invention,
Figure 5 shows a top view of a display device showing three columns of LEDs,
Figure 6 shows a front and perspective view of an LED in Fig. 5,
Figure 7 shows a top-view of an array of LEDs producing 3 x 3 pixels,
Figure 8a)-c) shows different embodiments of collimators-re-direction optics,
Figure 9-12 illustrates alternative ways of distributing the collimators and the spots on the region visually appearing to the viewer behind the display device,
Figure 13a)-b) illustrates an embodiment of re-shaping the light beams on the region,
Figure 14a)-b) illustrates an embodiment of a line-source for conducting the light emitted by the LEDs, and
Figure 15 shows where several rows of light-guides are arranged together to generate more pixels.

DESCRIPTION OF EMBODIMENTS

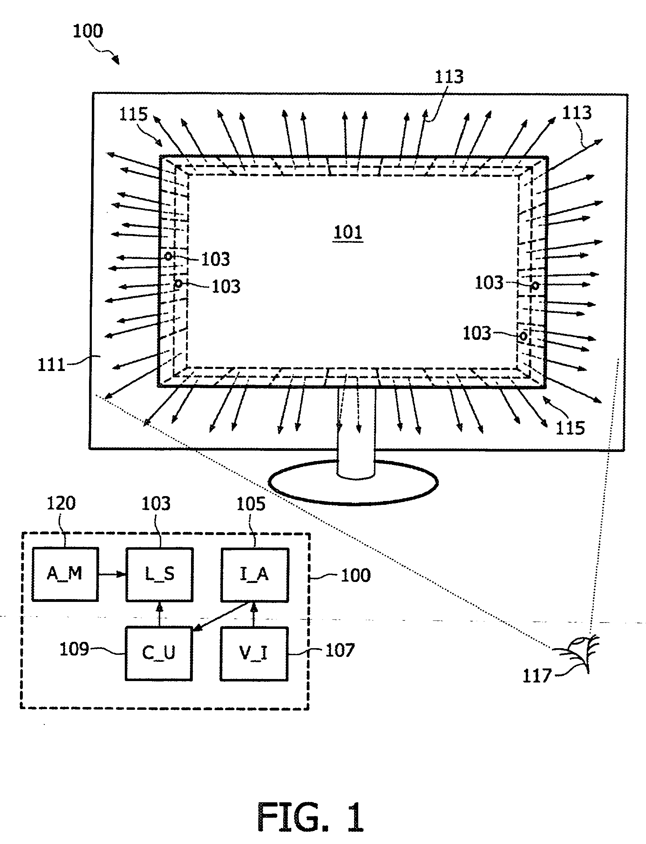

Figure 1 shows an ambient lighting system 100 for a display device including an image display region 101 according to the present invention adapted to be integrated into new or existing display devices, e.g. TV sets. The display device may be a computer monitor, a cathode ray tube (CRT) display, a liquid crystal display (LCD), an organic LED display (OLED), a plasma discharge display, a projection display, a thin-film printed optically-active display or a display using functionally equivalent display technology.

The ambient lighting system 100 comprises a video input (V_I) 107 for receiving video data to be displayed on the display device, an image analyzer (I_A) 105 for determining the color information from received video data; substantial point-like and controllable light sources (L_S) 103 disposed in an array 115, and a control unit (C_U) for controlling the emission colors of the light sources based on the determined color information. The color information is determined for a predefined measurement area within the display region 101 that preferably covers the periphery of at least one side of the display region 101. The determined color information therefore includes information about the color of the image near (or at) the periphery of the display region 101. Thus, if the light sources (L_S) 103 cover the whole display region 101 the measurement area would preferably include measurement area on the left/right side and the upper/lower side of the display region 101. The operation parameter (the determined color information) for the control unit (C_U) is therefore at any instant of time the colors that are being displayed near (or at) the periphery. As an example, if the left side is red, the light emitted by the light sources (L_S) 103 would preferably be red, whereas if the right side is partly white and partly green, the light emitted by the light sources (L_S) 103 would preferably be partly white and partly green. It would also be possible to process the video input (V_I) 107 such that the determined color information comprise the dominant color near the periphery of the display region 101.

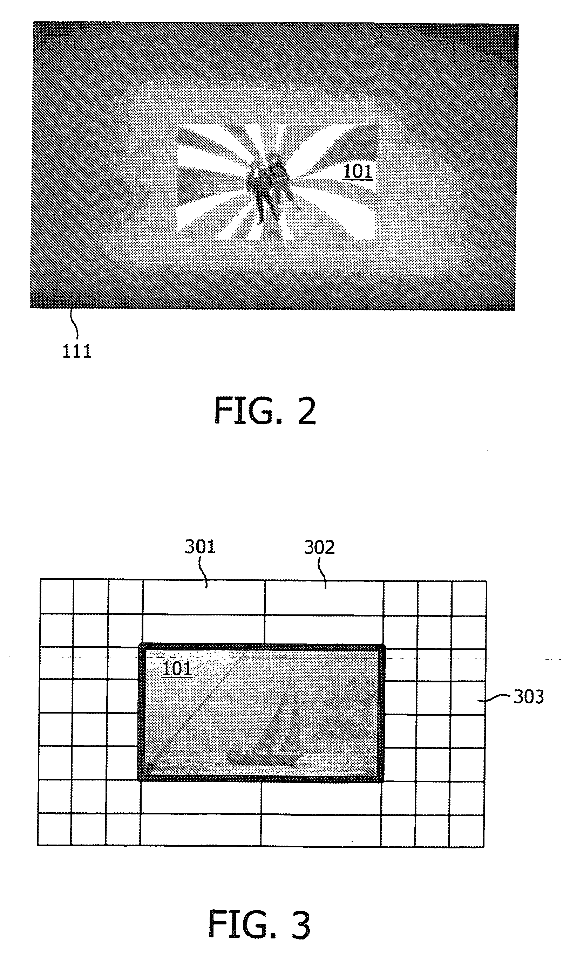

The arrangement of the light sources (L_S) 103 within the array is such that the position of the emitted light beams 113 onto the region visually appearing to the viewer 117, e.g. an ambiance surface peripherally surrounding the display region 101, the at least one ambiance surface peripherally surrounding the display region 101 forms a continuous pixelated image (see Figs. 2 and 3) acting as an extension of the image display region.

In one embodiment, the substantial point-like light sources 103 are Light Emitting Diodes (LEDs) that emit light of at least one wavelength. Thus, the LEDs may be so-called RGB LEDs (Red-Green-Blue) diodes, or discrete RGB LEDs that emit light of only one wavelength, respectively. Other light sources may also be implemented, such as hybrids between LEDs and lasers such as super-luminescent LEDs.

For simplicity, in the following, it will be assumed that the substantial point-like light sources 103 are LEDs, but other kinds of such light sources are of course also possible.

In one embodiment, the system further comprises an adjustment mechanism (A_M) 120 connected to the substantial point-like light sources for adjusting the light sources, the adjustment including adjusting the angle position of the point-like light sources and/or the angle position of the emitted light beams.

In one embodiment, the array of LEDs 103 is a matrix like arrangement of light sources (or other point-like light sources) comprising one or typically two or more rows and one or typically two or more columns of light sources, which may be mounted to the right and the left sides, and/or to the upper and the lower side behind or substantially at the periphery of the image display region 101 of the display device. Such an array/matrix of light sources is for example provided by mounting the LEDs to a pre-fabricated grid structure that is adapted to the size of the image display region 101.

In another embodiment, the array of light sources 103 comprises a frame structure comprising one or typically two or more rows/columns of LEDs such that the whole ambiance surface 111 peripherally surrounding the display region 101 participates in the display image.

Thus, for a viewer 117, a pixelated ambient light appears towards a viewer 117, where the "pixels" may extend along the outer perimeter of the display, or as illustrated graphically in Fig. 2, additionally along radial directions. Due to the property of the LEDs and the fact that they are arranged in said array, the resolution of the projected light onto the viewing region towards the user, e.g. the ambiance surface behind the display device, becomes very high.

Figure 3 illustrates graphically a resolution of 3 columns by 4 rows at the left and right side of the display and 2 columns by 2 rows at the top and bottom side. The grid reflects the location of the light spots. In practice, the spots will have a high overlap to obtain smooth light effects. This configuration results in a matrix with 56 addressable pixels, e.g. 301-303.

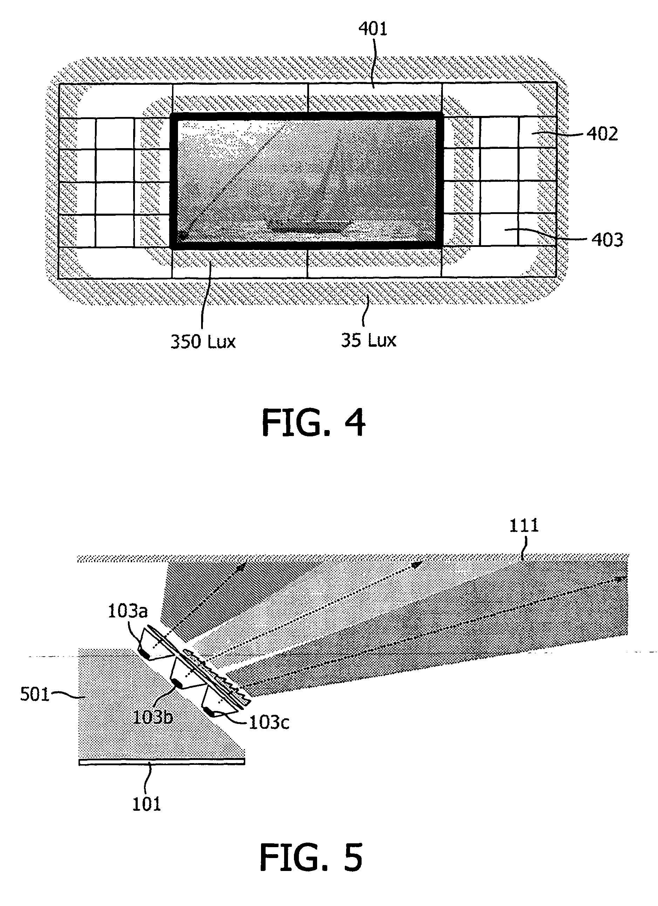

Figure 4 illustrates graphically a vertical resolution of the top and bottom part which has been reduced from 2 rows to only 1 row. Also the corner section can be reduced from 3 pixels to only one, thus the acceptable resolution is 32 pixels, e.g. 401-403.

In one embodiment, the light output results in a maximum of 35 Lux on the outer border and 350 Lux directly at the screen border. These boundary conditions cannot be fulfilled when using gas-discharge lamps. This is mainly due to their source size. It is such that the light cannot be collimated sufficiently. They can be fulfilled when using LEDs as the light source or other substantially point-like light sources.

Still, the optics required to 'project' these pixels accurately (rectangular grid, correct amount of overlap between pixels, color uniformity within a pixel) pose a challenge. Another challenge is posed by the different use cases: a wall mounted set, or a tabletop set (which is much further away from the wall).

Figure 5 is a top view of a display device 501, e.g. a TV set, showing one back corner of the device and the display region 101. In this embodiment, there are three columns of LEDs 103a-103c. Due to this arrangement, typically three columns of pixels (see Fig. 3) are generated onto the ambiance surface 111, where each LED is responsible for a certain spot, i.e. a pixel on the surface.

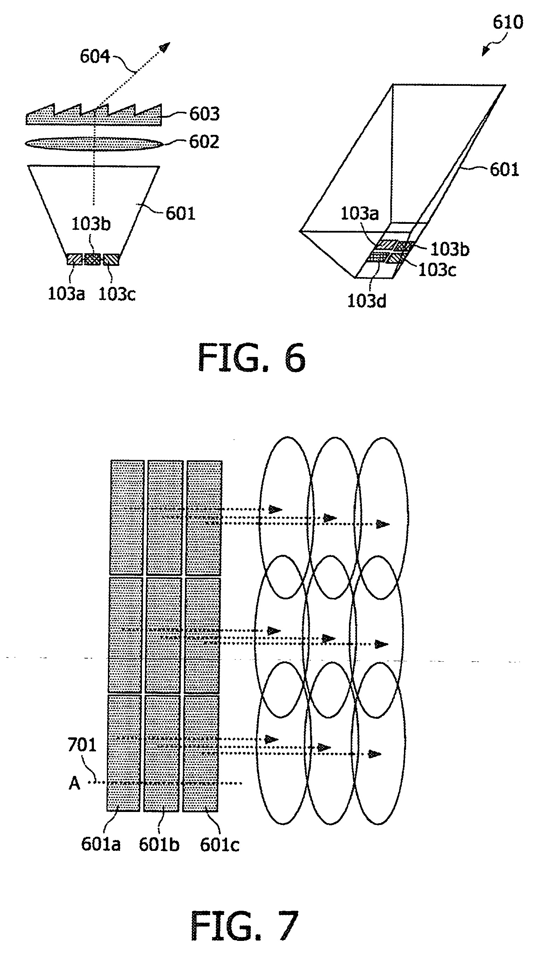

Figure 6 shows a front and perspective view of the LED in Fig. 5 having exits 610, the LEDs 103a-103d (103d is e.g. a "yellow" LED) being equipped with collimation means 601 for reducing the angular spread of the light towards the ambient surface.

The light of an LED 103a-103d is in most cases emitted in a cone of nearly 180 degrees (corresponding to a solid angle of $2\pi$, i.e. a hemisphere). This angular spread would result in a spot (pixel) on the wall that might be too large. This in turn would result in an overlap between pixels that is by far too large. Some degree of collimation (i.e. reducing the angular spread) is therefore needed. An example of a collimator 601 that is efficient and cost-effective is a tapered funnel in air having highly reflecting sidewalls. The reduction of the angular spread is, by approximation, given by the relation:

$$\sin(\theta_{out}) \approx \frac{D_{out}}{D_{in}} \sin(\theta_{in})$$

.

Here, $\theta_{in}$ and $\theta_{out}$ are the angular spread of the light entering and leaving the collimator, respectively. For an LED without collimating optics, typically, $\theta_{in}=90°-180°$.

$D_{in}$ and $D_{out}$ refer to the diameter of the collimator at the entrance and the exit, respectively.

Instead of collimators 601 in air, also solid collimators can be used in which light is guided from the entrance to the exit by means of total internal reflection (TIR).

To obtain some additional degree of collimation, a refractive optical element 602 such as a lens can be used. Alternatively, a refractive optical element such as a holographic lens can be used.

To ensure that the light beam 604 (resulting in a spot (pixel)) is directed to the intended location on the ambiance surface, redirection optics 603 are used. In its simplest form, redirection can be done by means of a thin transparent layer having a prism-like relief structure.

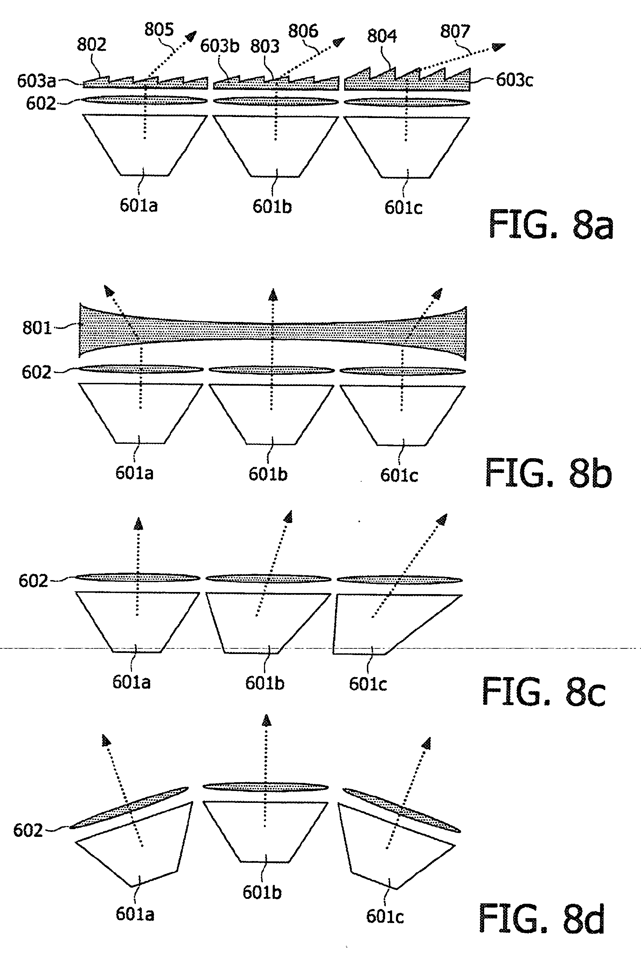

Figure 7 shows a top-view of an array of LEDs producing 3 x 3 pixels. Each rectangle corresponds to a single collimator 601a-601c on top of one or more LEDs, and on top of the collimators a redirection optical element is provided. A cross-section along the line labeled A 701 in Fig. 7 is shown in Fig. 8a)-d) illustrating several alternative embodiments of collimators in combination with redirection optics.

In the embodiments shown in Fig. 8a)-c) where the collimators 601a)-601c) have their bottom part lying within the same plane, the LEDs can be mounted on a single flat printed circuit board that also can serve the purpose of conducting heat generated by the LEDs. From a manufacturing point of view, this is an advantage.

In Figure 8a), the re-directional optical elements 603a-603c are provided having a the prism-like relief structures 603a-603c have slightly different dimensions where e.g. the inclination of the surface 802-804 increases and thus the re-direction of the light beams 805-807. The inclination of these surfaces is preferably optimized in relation to the distance between the array of the LEDs and the ambiance surface behind the display device.

In an embodiment, an adjustment mechanism (not shown) comprising an electronically adjustable optical element or re-directional optical element based on a liquid-crystal effect is provided for adjusting the position of the light emitting beams 805-807 onto the at least one ambient surface.

Figure 8b) shows a similar arrangement as shown in Fig. 8a), where instead of a negative lens is provided 801 as a re-directional element for re-direction of the light beams. In one embodiment, the focal length for the concave lens is adjustable for compensating for different distances between the display device and e.g. the ambience surface behind the display device.

As an example, for each pixel on the wall one can adjust the pixel position as well as the pixel size. The pixel position may e.g. be changed by means of:

- by manually tilting the LED+collimator+optics;
- by electronically means by e.g. using an liquid-crystal-based re-direction optical element (for example an LC layer sandwiched between a prism-like structure and a flat substrate; and

- by means of electrode layers and a voltage difference, where the LC molecules in the LC layer can be re-oriented, thereby changing the re-direction properties of the optical element.

The pixel size may be changed by e.g. adjusting the focusing properties of the optical elements (manually or electronically) by means of for example an adjustable LC-based lens.

In Fig. 8c) a different shape of the collimators is used to re-direct the light beams. In Fig. 8d) the angular position of the collimators is adjusted such that the emitted light beams hit the ambience surface at the right spots. In one embodiment, this angular position is adjustable, either manually or electronically.

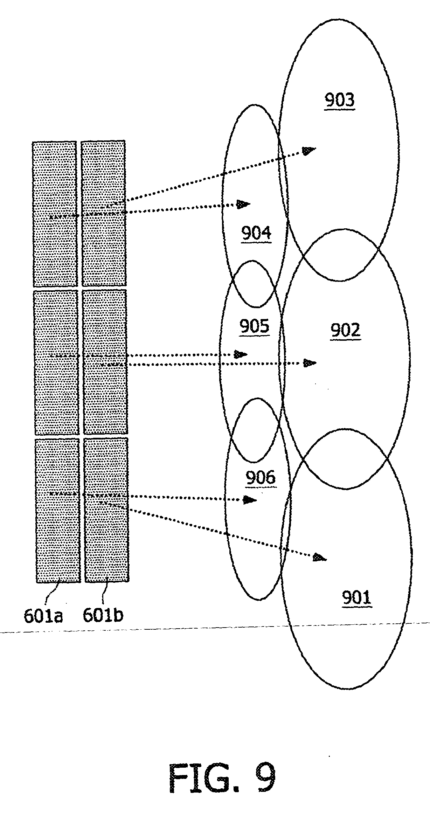

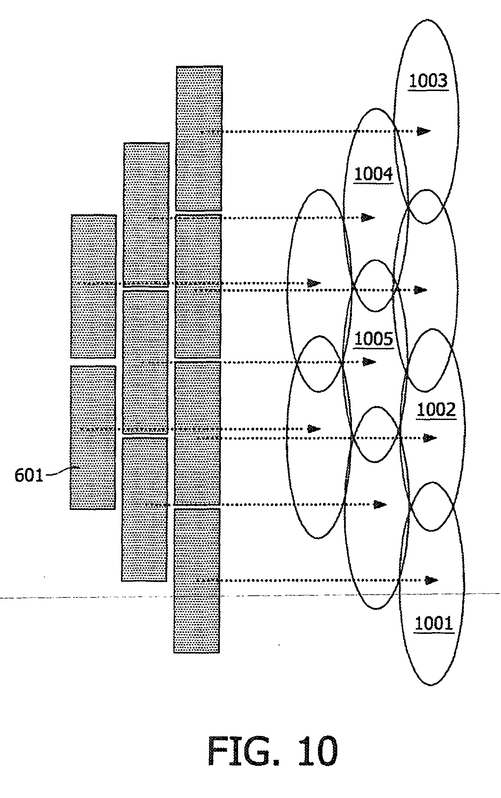

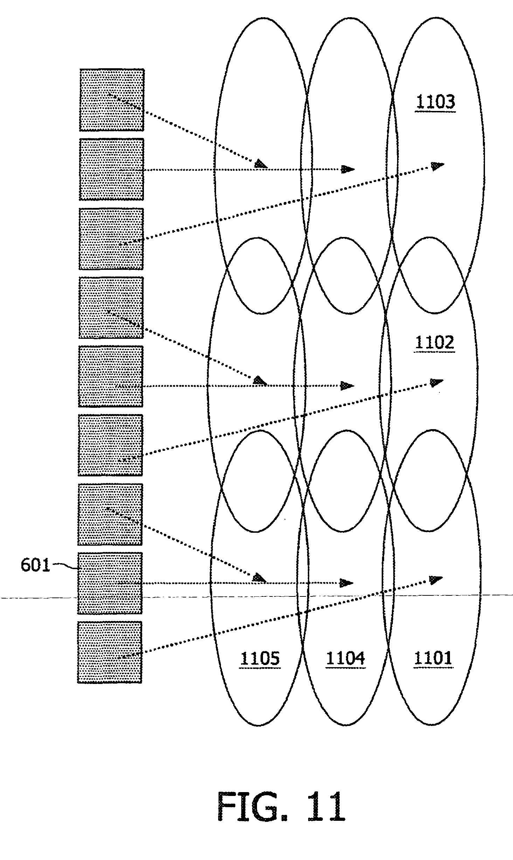

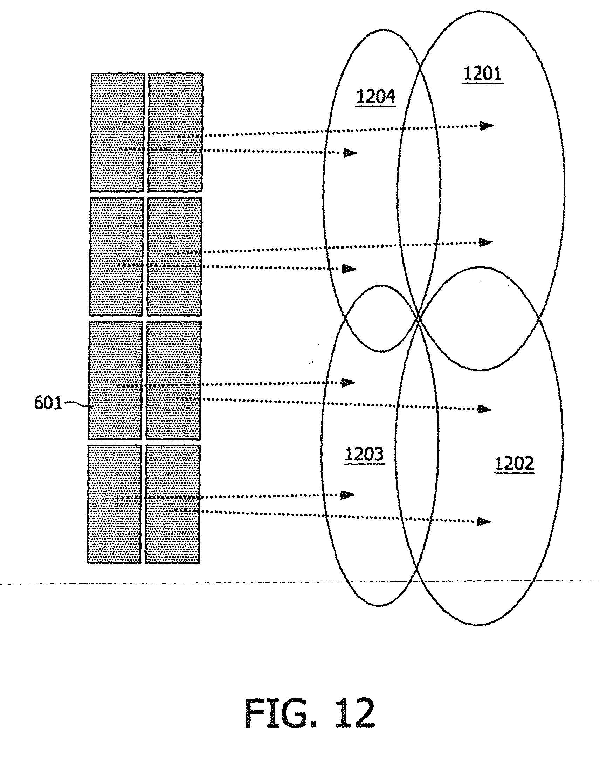

Alternative ways of distributing the collimators and the spots 901-906 (pixels), 1001-1005, 1101-1105, 1201-1204 on the wall are shown in Figure 9-12. It should be noted that in principle several collimators can be responsible for producing a single spot (pixel). An example is depicted in Figure 12.

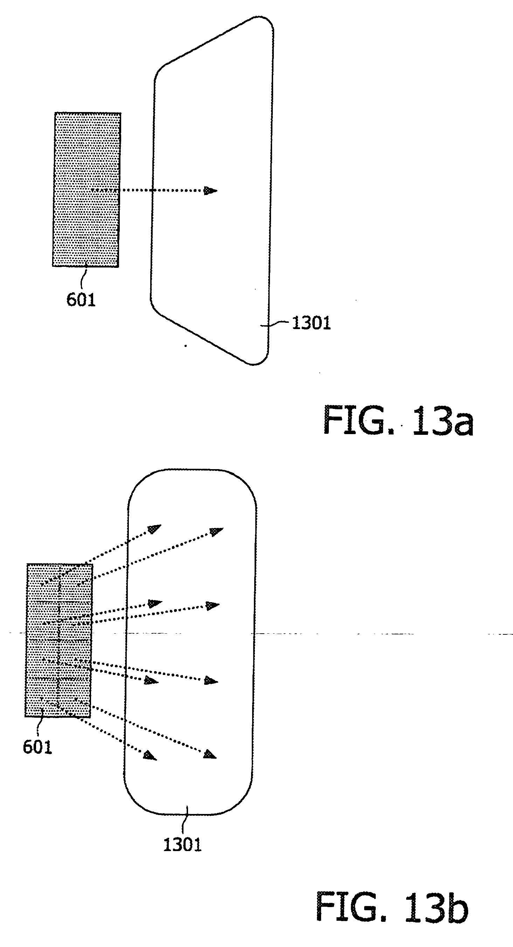

In case one projects a round or rectangular beam at an oblique angle onto a wall, the resulting spot on the wall will have an elliptical or trapezoidal shape, respectively. When covering a wall with a number of ellipses or trapezoids, there will always be non-uniformities caused by too much overlap at certain locations and voids at other locations. It would therefore be advantageous to shape the beam such that when projected at an oblique angle onto a wall, the resulting spot is a rectangle 1301. In one embodiment, this is achieved by sub-dividing an optical element arranged e.g. in front of the collimators 601 into few segments, e.g. 4 slightly different segments such that when the light beam passes the optical element the light becomes split into 4 parts, where each individual part will be directed to a slightly different location on the wall (the region viable towards the user). Thus, the total beam spot on the wall acquires the required shape (for example square instead of round) 1301. Such a scenario is depicted in Fig. 13a) and b).

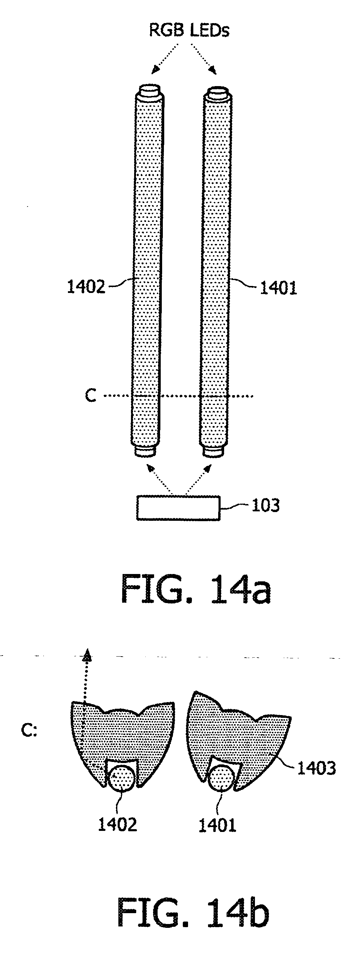

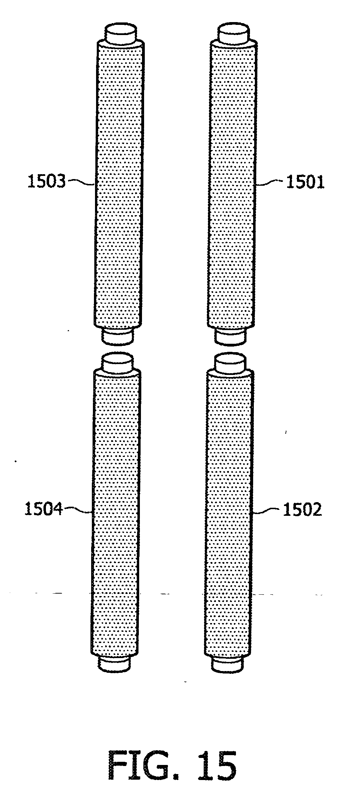

In one embodiment, instead of locating a collimator on top of one or more LEDs, the light from one or more LEDs is used to make a line-source first. This can be done, for example, by means of in-coupling the light from e.g. RGB LEDs into a transparent light-guide 1401-1402 (e.g. a plastic or glass rod), as shown in Figure 14a). The cross-section of the light-guide can be round, square, triangular etc. The light is guided by means of Total Internal Reflection (TIR). An out-coupling structure on a surface of the light-guide (e.g. dots of white paint) (not shown) may be used to couple light out of the guide 1401-1402. This light can be collimated for example by means of a transparent collimator 1403 that makes use of a combination of TIR and refraction (Figure 14b). More pixels can be generated by using several rows of light-guides 1501-1504 as shown in Fig. 15.

Certain specific details of the disclosed embodiment are set forth for purposes of explanation rather than limitation, so as to provide a clear and thorough understanding of the present invention. The scope of the invention is defined by the claims. Further, in this context, and for the purposes of brevity and clarity, detailed descriptions of well-known apparatuses, circuits and methodologies have been omitted so as to avoid unnecessary detail and possible confusion.

Reference signs are included in the claims, however the inclusion of the reference signs is only for clarity reasons and should not be construed as limiting the scope of the claims.

**Claims**

**1.** An ambient lighting system (100) for a display device (501) including an image display region (101), comprising

- controllable light sources (103) each being adapted to emit a light beam (113) of at least one wavelength onto a region (111) at least partly peripherally surrounding the display region (101) and visually appearing to a viewer (117), the light sources (103) being substantially point-like and disposed in an array (115) such that the positions of the light beams (113) emitted onto the region (111) form a pixelated image (301-303) providing at least a partial extension of the image display region (101),
- an image analyzer (105) for determining color information from video data of the displayed image, the color information being used as a control parameter for controlling the emission color of the emitted light beams (113), the system being **characterized by** further including
- collimators (601) having exits (610),
- refractive optical elements (602) situated in front of the exits (610), and
- re-directional optical elements (603, 801) situated in front of the refractive optical elements (602),

wherein the collimators (601) are situated with respect to the light sources (103) such that the emitted light beams (113, 604) pass through the respective collimators (601), exists (610), refractive optical elements (602) and re-directional optical elements (603, 801) prior to being emitted onto the region (111) visually appearing to the viewer (117).

**2.** An ambient lighting system according to claim 1, wherein the point-like light sources (103) comprise Light Emitting Diodes (LEDs).

**3.** An ambient lighting system according to claim 1, wherein the array (115) of the point-like light sources is a frame like-structure comprising at least two columns and at least two rows of the substantially point-like light sources (103a-103c) arranged substantially at the periphery or the back side of the display device (501).

**4.** An ambient lighting system according to claim 1, wherein the array (115) of the point-like light sources (103) comprises a frame of the light sources comprising at least two rows and two columns arranged substantially at the periphery or the back side of the display device (501).

**5.** An ambient lighting system according to claim 1, wherein the collimators (601) are selected from:

- a tapered funnel in air having light reflecting side walls, and
- solid collimators adapted to guide the light from an entrance to an exit by means of total-internal-reflection.

**6.** An ambient lighting system according to claim 1, wherein the refractive optical elements (602) are selected from:

- a positive lens,
- a negative lens,
- a bi-convex lens, a plano-convex lens, a bi-concave lens or a plano-concave lens,
- a fresnel-type lens,
- a holographic lens,
- active optical elements being connected to a power source for changing the focal length of the optical elements and/or re-directing the beam,
- optical elements being manually adjustable for changing the focal length of the optical elements and/or re-directing the beam, for each pixel independently or for several or all pixels on one side of the display together,
- a diffuser, including a diffuser with asymmetric diffusing properties, and
- a combination thereof.

**7.** An ambient lighting system according to claim 1, wherein the re-directional optical elements (603, 801) are selected from:

- a transparent film having a repetitive prism-like structures, and
- a negative lens covering at least one collimator.

**8.** An ambient lighting system according to claim 1, wherein the substantially point-like light sources (103) are mounted on a printed circuit board, the circuit board being adapted to conduct heat generated by the point-like light sources.

9. An ambient lighting system according to claim 1, further comprising an adjustment mechanism (120) connected to the substantial point-like light sources for adjusting the light sources, the adjustment including adjusting the angle position of the point-like light sources and the angle position of the emitted light beams.

10. An ambient lighting system according to claim 1, further comprising an adjustment mechanism comprising an electronically adjustable optical element or re-directional optical element based on a liquid-crystal effect for adjusting the angle position of the emitted light beams onto the region visually appearing to the viewer.

11. An ambient lighting system according to claim 1, further comprising at least one elongated light guide (1401-1402, 1501-1504) comprising an out-coupling structure, the light guide being coupled to one or more of the substantial point-like light sources (103) such that the emitted light beam emitted by at least one of the substantially point-like light sources (103) becomes conducted into the light guide (1401-1402, 1501-1504) under an angle such that the light becomes guided by means of total internal reflection until it interacts with the out-coupling structure and becomes coupled out of the light guide (1401-1402, 1501-1504).

12. An ambient lighting system according to claim 1, further comprising a re-shaping mechanism for re-shaping the light beams such that each respective pixel in the pixelated regions has a pre-defined shape.

13. An ambient lighting system according to claim 12, wherein the re-shaping mechanism comprises an optical element formed by two or more segments arranged in front of the substantially point-like light sources such that the emitted light beams pass through the two or more segments, the shapes of the segments and their internal arrangement being such that the light beam will be re-directed differently to a fixed location on the region visually appearing to the viewer.

14. A display device (501) including an image display region comprising the ambient lighting system (100) according to claim 1.

15. A display device according to claim 14, wherein the display device (501) is selected from:

- computer monitor display,
- cathode ray tube (CRT) display,
- a liquid crystal display (LCD),
- an organic LED display (OLED),

- a plasma discharge display, a projection display,
- thin-film printed optically-active display,
- or a display using a functionally equivalent display technology.

**Patentansprüche**

1. Raumbeleuchtungssystem (100) für eine Wiedergabeanordnung (501) mit einem Bildwiedergabegebiet (1091), wobei dieses System Folgendes umfasst:

- steuerbare Lichtquellen (103), die je zum Ausstrahlen eines Lichtbündels (113) wenigstens einer Wellenlänge zu einem Gebiet (111), das das Wiedergabegebiet (101) wenigstens teilweise peripher umgibt und einem Zuschauer (117) sichtbar erscheint, vorgesehen sind, wobei die Lichtquellen (103) im Wesentlichen punktartig und derart in einer Reihe (115) gegliedert sind, dass die Position der zu dem Gebiet (111) ausgestrahlten Lichtbündel (113) ein verpixeltes Bild (301-303) formt, das wenigstens teilweise eine partielle Erweiterung des Bildwiedergabegebietes (101) liefert,
- einen Bildanalysator (105) zum Ermitteln von Farbinformation aus Videodaten des wiedergegebenen Bildes, wobei die Farbinformation als Steuerparameter zur Steuerung der Emissionsfarbe der ausgestrahlten Lichtbündel (113) verwendet wird, wobei das System **dadurch gekennzeichnet** wird, dass es weiterhin Folgendes umfasst:
- Blenden (601) mit Ausgängen (610),
- brechende optische Elemente (602) vor den Ausgängen (610), und
- neurichtende optische Elemente (603, 801) vor den brechenden optischen Elementen (602),

wobei die Blenden (601) derart gegenüber den Lichtquellen (103) vorgesehen sind, dass die ausgestrahlten Lichtbündel (113, 604) durch die betreffenden Blenden (601), Ausgänge (610), brechenden optischen Elemente (602 und die neurichtenden optischen Elemente (603, 801) hindurchgehen, und zwar bevor sie zu dem Gebiet (111), das dem Zuschauer sichtbar erscheint, ausgestrahlt werden.

2. Raumbeleuchtungssystem nach Anspruch 1, wobei die punktartigen Lichtquellen (103) Leuchtdioden (LEDs) aufweisen.

3. Raumbeleuchtungssystem nach Anspruch 1, wobei die Reihe (115) punktartiger Lichtquellen eine rahmenartige Konstruktion mit wenigstens zwei Säulen und wenigstens zwei Reihen im Wesentlichen punktartiger Lichtquellen (103a-103c) aufweist, die im Wesentlichen am Umfang oder auf der Rückseite der Wiedergabeanordnung (501) vorgesehen ist.

4. Raumbeleuchtungssystem nach Anspruch 1, wobei die Reihe (115) punktartiger Lichtquellen (103) einen Rahmen von Lichtquellen aufweist, der wenigstens zwei Reihen und zwei Säulen umfasst, die im Wesentlichen am Umfang oder auf der Rückseite der Wiedergabeanordnung (501) vorgesehen sind.

5. Raumbeleuchtungssystem nach Anspruch 1, wobei die Blenden (601) eine Wahl sind aus:

   - einer kegelförmigen Luftschacht mit Licht reflektierenden Seitenwänden, und
   - massiven Blenden, vorgesehen zum Leiten des Lichtes von einem Eingang zu einem Ausgang, und zwar durch Totalreflexion.

6. Raumbeleuchtungssystem nach Anspruch 1, wobei die brechenden optischen Elemente (602) eine Wahl sind aus:

   - einer positiven Linse,
   - einer negativen Linse,
   - einer bikonvexen Linse, einer plankonvexen Linse, einer bikonkaven Linse oder einer plankonkaven Linse,
   - einer Fresnel-Linse,
   - einer holografischen Linse,
   - aktiven optischen Elementen, die zur Änderung der Brennweite der optischen Elemente und/oder zur Neurichtung des Bündels mit einer Speisequelle verbunden sind,
   - optischen Elementen, die zur Änderung der Brennweite der optischen Elemente und/oder zur Neurichtung des Bündels von Hand einstellbar sind, und zwar für jedes einzelne Pixel oder für verschiedene oder alle Pixel zusammen an einer Seite der Wiedergabeanordnung,
   - einem Diffuser, der einen Diffuser mit asymmetrischen Streueigenschaften aufweist, und
   - einer Kombination davon.

7. Raumbeleuchtungssystem nach Anspruch 1, wobei die neurichtenden optischen Elemente (603, 801) eine Wahl sind aus:

   - einem transparenten Film mit einer sich wiederholenden prismenartigen Struktur, und
   - einer negativen Linse, die wenigstens eine Blende bedeckt.

8. Raumbeleuchtungssystem nach Anspruch 1, wobei die im Wesentlichen punktartigen Lichtquellen (103) auf einer Leiterplatte vorgesehen sind, wobei die Leiterplatte dazu vorgesehen ist, von den punktartigen Lichtquellen erzeugte Wärme abzuleiten.

9. Raumbeleuchtungssystem nach Anspruch 1, wobei das System weiterhin einen Einstellmechanismus (120) aufweist, der zur Einstellung der Lichtquellen mit den im Wesentlichen punktförmigen Lichtquellen verbunden ist, wobei die Einstellung das Einstellen der Winkellage der punktartigen Lichtquellen und die Winkellage der ausgestrahlten Lichtbündel umfasst.

10. Raumbeleuchtungssystem nach Anspruch 1, wobei das System weiterhin einen Einstellmechanismus aufweist, der ein elektronisch einstellbares optisches Element oder ein neurichtendes optisches Element auf Basis eines Flüssigkristalleffektes aufweist, und zwar zur Einstellung der Winkellage der ausgestrahlten Lichtbündel zu dem Gebiet, das dem Zuschauer sichtbar erscheint.

11. Raumbeleuchtungssystem nach Anspruch 1, wobei das System weiterhin wenigstens einen länglichen Lichtleiter (1401-1402, 1501-1504) aufweist, der eine Auskoppelstruktur aufweist, wobei der Lichtleiter mit einer oder mehreren im Wesentlichen punktartigen Lichtquellen (103) derart gekoppelt ist, dass das von wenigstens einer der im Wesentlichen punktartigen Lichtquellen (103) ausgestrahlte Lichtbündel in den Lichtleiter (1401-1402, 1501-1504) eingeführt wird, und zwar in einem derartigen Winkel, dass das Licht durch Totalreflexion geleitet wird, bis es mit der Auskoppelstruktur zusammenwirkt und aus dem Lichtleiter (1401-1402, 1501-1504) ausgekoppelt wird.

12. Raumbeleuchtungssystem nach Anspruch 1, wobei das System weiterhin einen Umformungsmechanismus zum Umformen der Lichtbündel aufweist, und zwar derart, dass jedes einzelne Pixel in den verpixelten Gebieten eine vorher definierte Form hat.

13. Raumbeleuchtungssystem nach Anspruch 12, wobei der Umformungsmechanismus ein optisches Element aufweist, das durch zwei oder mehr Segmente gebildet wird, die derart vor den im Wesentlichen punktartigen Lichtquellen vorgesehen sind, dass die ausgestrahlten Lichtbündel durch zwei oder mehr Segmente hindurchgehen, wobei die Form der Segmente und die Anordnung derselben derart ist, dass das Lichtbündel unterschiedlich auf eine feste Stelle in dem dem Zuschauer sichtbar erscheinenden Gebiet neugerichtet wird.

14. Wiedergabeanordnung (501) mit einem Bildwiedergabegebiet mit dem Raumbeleuchtungssystem (100) nach Anspruch 1.

15. Wiedergabeanordnung nach Anspruch 14, wobei die Wiedergabeanordnung (501) eine Wahl ist aus:

   - einer Computermonitor-Wiedergabeanordnung,

- Elektronenstrahlröhren-Wiedergabeanordnung (CRT),
- einer Flüssigkristall-Wiedergabeanordnung (LCD),
- einer organischen LED-Wiedergabeanordnung (OLED),
- einer Plasma-Wiedergabeanordnung, einer Projektions-Wiedergabeanordnung,
- einer optisch aktiven gedruckten Dünnfilm-Wiedergabeanordnung oder
- einer Wiedergabeanordnung, bei der eine funktionell gleichwertige Wiedergabetechnologie angewandt wird.

## Revendications

1. Système d'éclairage ambiant (100) pour un dispositif d'affichage (501) comprenant une région d'affichage d'image (101), comprenant :

    - des sources de lumière contrôlables (103) qui sont adaptées chacune de manière à émettre un faisceau lumineux (113) d'au moins une longueur d'onde sur une région (111) qui entoure d'une manière partiellement périphérique la région d'affichage (101) et qui apparaît visuellement à un spectateur (117), les sources de lumière (103) étant sensiblement en forme de point et étant disposées dans un réseau (115) de telle façon que les positions des faisceaux lumineux qui sont émis sur la région (111) constituent une image pixélisée (301 à 303) fournissant au moins une extension partielle de la région d'affichage d'image (101),
    - un analyseur d'image (105) pour déterminer de l'information de couleur à partir de données vidéo de l'image affichée, l'information de couleur étant utilisée en tant qu'un paramètre de contrôle pour contrôler la couleur d'émission des faisceaux lumineux émis (113), le système étant **caractérisé en ce qu'**il comprend en outre :
    - des collimateurs (601) ayant des sorties (610),
    - des éléments optiques de réfraction (602) qui se situent en face des sorties (610), et
    - des éléments optiques re-directionnels (603, 801) qui se situent en face des éléments optiques de réfraction (602),

    dans lequel les collimateurs (601) se situent par rapport aux sources de lumière (103) de telle façon que les faisceaux lumineux émis (113, 604) passent à travers les collimateurs respectifs (601), les sorties (610), les éléments optiques de réfraction (602) et les éléments optiques re-directionnels (603, 801) avant de n'être émis sur la région (111) qui apparaît visuellement au spectateur (117).

2. Système d'éclairage ambiant selon la revendication 1, dans lequel les sources de lumière en forme de point (103) comprennent des diodes électroluminescentes (DEL).

3. Système d'éclairage ambiant selon la revendication 1, dans lequel le réseau (115) des sources de lumière en forme de point est une structure en forme de trame comprenant au moins deux colonnes et au moins deux rangées des sources de lumière sensiblement en forme de point (103a à 103c) qui sont disposées sensiblement à la périphérie ou du côté arrière du dispositif d'affichage (501).

4. Système d'éclairage ambiant selon la revendication 1, dans lequel le réseau (115) des sources de lumière en forme de point (103) comprend une trame des sources de lumière comprenant au moins deux rangées et deux colonnes qui sont disposées sensiblement à la périphérie ou du côté arrière du dispositif d'affichage (501).

5. Système d'éclairage ambiant selon la revendication 1, dans lequel les collimateurs (601) sont sélectionnés parmi :

    - un entonnoir conique dans l'air ayant des parois latérales réfléchissantes, et
    - des collimateurs solides qui sont adaptés de manière à guider la lumière à partir d'une entrée vers une sortie par le biais d'une réflexion interne totale.

6. Système d'éclairage ambiant selon la revendication 1, dans lequel les éléments optiques de réfraction (602) sont sélectionnés parmi :

    - une lentille positive.
    - une lentille négative,
    - une lentille biconvexe, une lentille plan-convexe, une lentille biconcave ou une lentille plan-concave,
    - une lentille du type de Fresnel,
    - une lentille holographique,
    - des éléments optiques actifs étant reliés à une source d'énergie pour changer la longueur focale des éléments optiques et/ou pour rediriger le faisceau,
    - des éléments optiques étant manuellement réglables pour changer la longueur focale des éléments optiques et/ou pour rediriger le faisceau, pour chaque pixel d'une manière indépendante ou pour plusieurs ou pour tous les pixels d'un côté de l'affichage ensemble,
    - un diffuseur, y compris un diffuseur avec des propriétés diffusants asymétriques, et

- une combinaison de ceux-ci.

7. Système d'éclairage ambiant selon la revendication 1, dans lequel les éléments optiques re-directionnels (603, 801) sont sélectionnés parmi :

 - un film transparent ayant une structure répétitive en forme de prisme, et
 - une lentille négative couvrant au moins un collimateur.

8. Système d'éclairage ambiant selon la revendication 1, dans lequel les sources de lumière sensiblement en forme de point (103) sont montées sur une carte de circuit imprimé, la carte de circuit imprimé étant adaptée de manière à conduire la chaleur qui est générée par les sources de lumière en forme de point.

9. Système d'éclairage ambiant selon la revendication 1, comprenant en outre un mécanisme de réglage (120) qui est relié aux sources de lumière sensiblement en forme de point pour régler les sources de lumière, le réglage comprenant le réglage de la position angulaire des sources de lumière en forme de point et de la position angulaire des faisceaux lumineux émis.

10. Système d'éclairage ambiant selon la revendication 1, comprenant en outre un mécanisme de réglage comprenant un élément optique électroniquement réglable ou un élément optique re-directionnel sur la base d'un effet à cristaux liquides pour régler la position angulaire des faisceaux lumineux émis sur la région qui apparaît visuellement au spectateur.

11. Système d'éclairage ambiant selon la revendication 1, comprenant en outre au moins un guide de lumière allongé (1401 à 1402, 1501 à 1504) comprenant une structure de sortie par couplage, le guide de lumière étant relié à une ou à plusieurs des sources de lumière sensiblement en forme de point (103) de telle façon que le faisceau lumineux émis qui est émis par au moins une des sources de lumière sensiblement en forme de point (103) soit guidé dans le guide de lumière (1401 à 1402, 1501 à 1504) sous un angle de telle façon que la lumière soit guidée par le biais d'une réflexion interne totale jusqu'à ce qu'elle interagisse avec la structure de sortie par couplage et soit sortie du guide de lumière (1401 à 1402, 1501 à 1504) par couplage.

12. Système d'éclairage ambiant selon la revendication 1, comprenant en outre un mécanisme de remise en forme pour remettre en forme les faisceaux lumineux de telle façon que chaque pixel respectif dans les régions pixélisées présente une forme prédéfinie.

13. Système d'éclairage ambiant selon la revendication 12, dans lequel le mécanisme de remise en forme comprend un élément optique étant formé par deux ou plus de segments qui sont disposés en face des sources de lumière sensiblement en forme de point de telle façon que les faisceaux lumineux émis passent à travers les deux ou plus de segments, les formes des segments et de leur agencement interne étant telles de façon que le faisceau lumineux soit redirigé différemment vers un emplacement fixe sur la région qui apparaît visuellement au spectateur.

14. Dispositif d'affichage (501) comprenant une région d'affichage d'image comprenant le système d'éclairage ambiant (100) selon la revendication 1.

15. Dispositif d'affichage selon la revendication 14, dans lequel le dispositif d'affichage (501) est sélectionné parmi :

 - un affichage du moniteur d'ordinateur,
 - un affichage du tube à rayons cathodiques (CRT),
 - un affichage à cristaux liquides (LCD),
 - un affichage organique DEL (DELO),
 - un affichage à décharge de plasma, un affichage de projection,
 - un affichage optiquement actif imprimé à film mince, ou
 - un affichage utilisant une technologie d'affichage fonctionnellement équivalente.

FIG. 1

FIG. 2

FIG. 3

401

402

403

350 Lux    35 Lux

# FIG. 4

111

103a

501

103b    103c

101

# FIG. 5

# FIG. 6

# FIG. 7

FIG. 8a

FIG. 8b

FIG. 8c

FIG. 8d

FIG. 9

FIG. 10

FIG. 11

FIG. 12

601

1301

## FIG. 13a

601

1301

## FIG. 13b

RGB LEDs

1402 — 1401

C

103

# FIG. 14a

C:

1403

1402  1401

# FIG. 14b

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1551178 A
- WO 2006003624 A
- WO 2006059263 A
- US 20060227302 A
- WO 2005076602 A
- WO 2005062608 A
- DE 202005008776 U1